# EUROPEAN PATENT APPLICATION

(11) **EP 1 947 055 A1**
(43) Date of publication of application: **23.07.2008**
(21) Application number: 07150170.4
(22) Date of filing: 19.12.2007
(51) Int. Cl.: C01B 13/14, C01B 13/18, C01F 5/00, C01F 17/00, C01G 3/00, C01G 9/00, C01G 45/00, C01G 49/00

(54) **Methods for making metal-containing nanoparticles of controlled size and shape**

(30) Priority: 08.01.2007 US 620773
(71) Applicant: Afton Chemical Corporation, Richmond, VA 23219 (US); Virginia Commonwealth University, Richmond, VA 23284 (US)
(72) Inventor: Aradi, Allen A., Glen Allen, 23059 (US); El-Shall, Mohamed Samy Sayed, Richmond, VA 23236 (US); Jao, Tze-Chi, Glen Allen, VA 23060 (US); Panda, Asit Baran At- Chowdhuribard, 721442, West Bengal (IN)
(74) Representative: Schwabe - Sandmair - Marx

(57) **Abstract**

A method for producing metal-containing nanoparticles. The method includes combining a metal organic compound selected from metal acetates, metal acetyl acetonates, and metal xanthates with an amine to provide a solution of metal organic compound in the amine. The solution is then irradiated with a high frequency radiation source to provide metal nanoparticles having the formula (Aₐ)ₘ(B_{b})ₙXₓ, wherein each of A and B is selected from a metal, X is selected from the group consisting of oxygen, sulfur, selenium, phosphorus, halogen, and hydroxide, subscripts a, b, and x represent compositional stoichiometry, and each of m and n is greater than or equal to zero, with the proviso that at least one of m and n is greater than zero.

## Description

### TECHNICAL FIELD

The embodiments described herein relate to methods for making metal-containing nanoparticles or nanoalloy particles. In particular, metal nanoparticle components are provided that may be readily dispersed in oil and/or hydrocarbon materials for use in a wide variety of applications.

### BACKGROUND AND SUMMARY

Metal-containing nanoparticles or nanoalloy particles may be used in a wide range of applications. For example, metal oxide nanoparticles may be used in: solid oxide fuel cells (in the cathode, anode, electrolyte and interconnect); catalytic materials (automobile exhausts, emission control, chemical synthesis, oil refinery, waste management); magnetic materials; superconducting ceramics; optoelectric materials; sensors (eg gas sensors, fuel control for engines); structural ceramics (eg artificial joints). Metal-containing nanoparticles such as metal oxide nanoparticles may also find use in cosmetics.

Conventional metal particles typically have grain sizes that fall within the micrometer range and often are supplied in the form of particles having particle sizes greater than the micrometer range, However, metal particles that are comprised of nanometer sized grains may have important advantages over conventional sized metal particles.

Until now, the ability to economically produce useful metal-containing nanoparticles or nanoalloy particles with uniform size and shape has proven to be a major challenge to materials science. Such challenges include producing fine-scale metal-containing nanoparticles, with: (a) the correct chemical composition; (b) a uniform size distribution; (c) the correct crystal structure; and (d) at a low cost.

Nevertheless, metal-containing nanoparticles or nanoalloy particles, such as metal oxides having very small grain sizes (less than 20 nm) have only been attained for a limited number of metal oxides. Processes used to achieve fine grain size for a wide variety of metal-containing nanoparticles or nanoalloy particles are typically very expensive, have low yields and may be difficult to scale up.

Conventional methods used for synthesizing nanoparticle size materials include gas phase synthesis, ball milling, co-precipitation, sol gel, and micro emulsion methods. Descriptions of such processes are provided in U.S. Patent No. 6,752,979. The foregoing methods are typically applicable to different groups of materials, such as metals, alloys, intermetallics, oxides and non-oxides. Despite the methods described above, there continues to be a need for a simple, highly effective process for making metat-containing nanoparticles on a large scale for use in a variety of applications.

With regard to the above, exemplary embodiments described herein provide methods for making metal-containing nanoparticles. The method includes combining a metal organic compound selected from metal acetates, metal acetyl acetonates, and metal xanthates with an amine to provide a solution of metal organic compound in the amine. The solution is then irradiated with a high frequency radiation source to provide metal nanoparticles having the formula (Aₐ)ₘ(B_{b})ₙXₓ, wherein each of A, B is selected from a metal, X is selected from the group consisting of oxygen, sulfur, selenium, phosphorus, halogen, and hydroxide, subscripts a, b, and x represent compositional stoichiometry, and each of m and n is greater than or equal to zero with the proviso that at least one of m and n is greater than zero.

In another exemplary embodiment, the disclosure provides a method for producing oil dispersible nanoparticles. The method includes combining cerium acetate with a hydrocarbyl component to provide a cerium acetate solution. The solution is then irradiated with a high frequency radiation source to provide substantially stabilized dispersion of cerium oxide nanoparticles.

As set forth briefly above, embodiments of the disclosure provide unique nano-sized particles having a substantially uniform size and shape and methods for making such nano-sized particles. Nano-sized particles, particularly metal-containing nanoparticles made according to the disclosed embodiments, may be suitable for making stable dispersions of the nanoparticles in oil or hydrocarbon solvents for use in cosmetics, lubricants, or for use as catalysts in hydrocarbon processes and fuels.

It is to be understood that both the foregoing general description and the following detailed description are exemplary and explanatory only and are intended to provide further explanation of the embodiments disclosed and claimed. The phrase "having the formula" is intended to be non-limiting with respect to nanoparticles or nanoalloy particles described herein. The formula is given for the purposes of simplification and is intended to represent mono-, di-, tri-, tetra-, and polymetallic nanoparticles.

### BRIEF DESCRIPTION OF THE DRAWINGS

FIG. 1 is an x-ray diffraction pattern of nanoalloy particles according to a first embodiment of the disclosure;

FIG. 2 is photomicrograph of the nanoalloy particles according to the first embodiment of the disclosure;

FIG. 3 is an x-ray diffraction pattern of nanoalloy particles according to a second embodiment of the disclosure;

FIG. 4 is photomicrograph of the nanoalloy particles according to the second embodiment of the disclosure;

FIG. 5 is an x-ray diffraction pattern of nanoalloy particles according to a third embodiment of the disclosure; and

FIG. 6 is photomicrograph of the nanoalloy particles according to the third embodiment of the disclosure.

### DETAILED DESCRIPTION OF EMBODIMENTS

For the purposes of this disclosure, the terms "hydrocarbon soluble," "oil soluble," or "dispersable" are not intended to indicate that the compounds are soluble, dissolvable, miscible, or capable of being suspended in a hydrocarbon compound or oil in all proportions. These do mean, however, that they are, for instance, soluble or stably dispersible in an oil or hydrocarbon solvent to an extent sufficient to exert their intended effect in the environment in which the oil or solvent is employed. Moreover, the additional incorporation of other additives may also permit incorporation of higher levels of a particular additive, if desired.

As used herein, "hydrocarbon" means any of a vast number of compounds containing carbon, hydrogen, and/or oxygen in various combinations. The term "hydrocarbyl" refers to a group having a carbon atom directly attached to the remainder of the molecule and having predominantly hydrocarbon character. Examples of hydrocarbyl groups include:
(1) hydrocarbon substituents, that is, aliphatic (e.g., alkyl or alkenyl), alicyclic (e.g., cycloalkyl, cycloalkenyl) substituents, and aromatic-, aliphatic-, and alicyclic-substituted aromatic substituents, as well as cyclic substituents wherein the ring is completed through another portion of the molecule (e.g., two substituents together form an alicyclic radical);
(2) substituted hydrocarbon substituents, that is, substituents containing non-hydrocarbon groups which, in the context of the description herein, do not alter the predominantly hydrocarbon substituent (e.g., halo (especially chloro and fluoro), hydroxy, alkoxy, mercapto, alkylmercapto, nitro, nitroso, and sulfoxy);
(3) hetero-substituents, that is, substituents which, while having a predominantly hydrocarbon character, in the context of this description, contain other than carbon in a ring or chain otherwise composed of carbon atoms. Hetero-atoms include sulfur, oxygen, nitrogen, and encompass substituents such as pyridyl, furyl, thienyl and imidazolyl. In general, no more than two, preferably no more than one, non-hydrocarbon substituent will be present for every ten carbon atoms in the hydrocarbyl group; typically, there will be no non-hydrocarbon substituents in the hydrocarbyl group.

The metal-containing nanoparticles described herein are made by a process that provides a substantially uniform size and shape, and metal nanoparticles with the formula (Aₐ)ₘ(B_{b})ₙXₓ, wherein each of A and B is selected from a metal, X is selected from the group consisting of oxygen, sulfur, selenium, phosphorus, halogen, and hydroxide, subscripts a, b, and x represent compositional stoichiometry, and each of m and n is greater than or equal to zero with the proviso that at least one of m and n is greater than zero. As set forth above, the metal nanoparticles described herein are not limited to the foregoing one or two metal sulfides or oxides, but may include additional metals as alloying or doping agents in the formula.

In the foregoing formula, A and B of the metal-containing nanoparticles may be selected from Groups 1 A, 2A, 3A, 4A, 5A. and 6A of the Periodic Table, transition metals, lanthanides, actinides, and mixtures thereof. Representative metals include, but are not limited to, titanium, zirconium, hafnium, thorium, germanium, tin, niobium, tantalum, molybdenum, tungsten, uranium, cerium, the rare earth metals, copper, beryllium, zinc, cadmium, mercury, aluminum, yttrium, gallium, indium, lanthanum, manganese, iron, cobalt, nickel, calcium, magnesium, strontium, and barium.

The metal-containing nanoparticles described herein may be uniformly spherical, plate-like, or rod-like and will typically have a substantially uniform particle size of less than 50 nanometers. For example, the nanoparticles may have a uniform size ranging from about I to about 30 nanometers. Other uniform particle sizes may range from about 2 to about 10 nanometers. Still other uniform particle sizes may range from about 3 to about 6 nanometers.

According to the exemplary embodiments described herein, the metal-containing nanoparticles may be made by a relatively simple process. The process is primarily a two step process that includes combining one or more metal organic compounds with a hydrocarbyl component to provide a solution of metal organic compound in the hydrocarbyl component. The solution of metal organic compound is then irradiated by a high frequency electromagnetic radiation source to provide stabilized metal-containing nanoparticles.

In the first step of the process, one or more metal-organic compounds are dissolved in a hydrocarbyl component that is compatible with oils and hydrocarbon solvents. A suitable hydrocarbyl component is an amine or a mixture of amine and organic acid. The amine may be a saturated or unsaturated hydrocarbyl amine having from about 3 to about 24 carbon atoms. Suitable hydrocarbyl amines include, but are not limited to amines of the formula RNH₂ in which R is an unsaturated hydrocarbyl radical having from 3 to 24 carbon atoms. A suitable range for R is from 1 to 20 carbon atoms. R may be an aliphatic or a cycloaliphatic, saturated or unsaturated hydrocarbon radical. Typical unsaturated hydrocarbyl amines which can be employed include hexadecylamine, oleylamine, allylamine, furfurylamine, and the like.

When used, the organic acid may be selected from unsaturated fatty acids containing from about 10 to about 26 carbon atoms. Suitable organic acids include, but are not limited to, oleic acid, erucic acid, palmitoleic acid, myristoleic acid, linoleic acid, linolenic acid, elaeosteric acid, arachidonic acid and/or ricinoleic acid. Fatty acid mixtures and fractions obtained from natural fats and oils, for example peanut oil fatty acid, fish oil fatty acid, linseed oil fatty acid, palm oil fatty acid, rapeseed oil fatty acid, ricinoleic oil fatty acid, castor oil fatty acid, colza oil fatty acid, soya oil fatty acid, sunflower oil fatty acid, safflower oil fatty acid and tall oil fatty acid, may also be used.

The metal organic compound solution may contain a molar ratio of amine to organic acid ranging from about 1:1 to about 3:1 amine to acid. Likewise, the solution may contain a molar ratio of amine to metal organic compound ranging from about 5:1 to about 10:1.

In addition to amines and/or acids other liganding solvents or stabilizers may be used to provide the nanoparticles according to the disclosure. Examples of other suitable hydrocarbyl components include, but are not limited to, alky thiols of variable chain length, phosphine surfactants such as trioctylphosphine oxide, and polymers such as polyamides and polystyrene may be used to provide coated nanoparticles. Mixtures of coordinating (liganding) solvents such as oleylamine and oleic acid and non-coordinating solvents such as hexadecene and otadecene may be used to control and/or optimize the shape of the nanoparticles.

After forming the solution of metal organic compound in the hydrocarbyl component, the solution may be heated for a period of time at elevated temperature to remove any water or crystallization and/or to form a clear solution. Accordingly, the solution may be heated and held at a temperature ranging from about 50° to about 150° C. for a period of time ranging from about I minute to about 50 minutes depending on the scale of the reaction mixture. A large volume of metal organic compound solution may require a longer heating time, while a smaller volume may require a shorter heating time.

Upon heating the solution, a substantially clear solution of metal organic compound in the hydrocarbyl component is obtained. The clear solution is then irradiated for a period of time using a high frequency electromagnetic radiation source to provide stabilized metal-containing nanoparticles in the hydrocarbyl component. A suitable high frequency electromagnetic radiation source is a microwave radiation source providing electromagnetic radiation with wavelengths ranging from about I millimeter to about I meter corresponding to frequencies from about 300 GHz to about 300 MHz, respectively. A more suitable frequency range for the electromagnetic radiation ranges from about 0.4 GHz to about 40 GHz. A particularly suitable frequency range is from about 0.7 GHz to about 24 GHz. The irradiation step may be conducted for a period of time ranging from about 10 seconds to about 50 minutes depending on the volume of reactants present in the reaction mixture.

Without being bound by theoretical considerations, it is believed that irradiation of the solution rapidly decomposes the metal-organic compound to produce metal ions which are then coordinated with the hydrocarbyl component to form uniformly dispersed metal-containing nanoparticles that are stabilized or coated by the hydrocarbyl component. It is also believed that the use of microwave radiation leads to selective dielectric heating due to differences in the solvent and reactant dielectric constants that provides enhanced reaction rates. Thus formation of metal-containing nanoparticles by the foregoing process is extremely rapid enabling large scale production of nanoparticles in a short period of time. Since microwave radiation is used, thermal gradients in the reaction mixture are minimized thereby producing a generally uniform heating effect and reducing the complexity required for scale-up to commercial quantities of nanoparticle products.

Microwave heating is able to heat the target compounds without heating the entire reaction container or oil bath, thereby saving time and energy. Excitation with microwave radiation results in the molecules aligning their dipoles within the external electrical field. Strong agitation, provided by the reorientation of molecules, in phase with electrical field excitation, causes an intense internal heating.

After the irradiation step, the stabilized dispersion may be washed with an alcohol to remove any free acid or amine remaining in the stabilized dispersion of nanoparticles. Alcohols that may be used to wash the stabilized metal-containing nanoparticles may be selected from C₁ to C₄ alcohols, A particularly suitable alcohol is ethanol.

The size and shape of metal-containing nanoparticles produced by the foregoing process depends on the amount of hydrocarbyl component, and heating time used to provide dispersible metal-containing nanoparticles.

The particle size of the metal-containing nanoparticles may be determined by examining a sample of the particles using TEM (transmission electron microscopy), visually evaluating the grain size and calculating an average grain size therefrom. The particles may have varying particle size due to the very fine grains aggregating or cohering together. However, the particles produced by the foregoing process are typically crystalline nanoparticles having a uniform particle size that is substantially in the range of from 1 to 10 nanometers.

The following examples are given for the purpose of illustration only, and are not intended to limit the disclosed embodiments.

### Example 1 - Production of CeO₂ Nanoparticles

The following procedure was used to produce cerium oxide nanoparticles having a particle size of less than 5 nanometers. Cerium acetate (1 gram, 0.00315 mols) was mixed with 7.5 mL of oleylamine (0.2279 mols) and 4.33 mL of oleic acid (0.13 mols) in a suitable vessel. The mixture was heated to 110° C and held at that temperature for 10 minutes to provide a clear solution of cerium acetate without crystalline water in the solution. Next, the cerium acetate solution was irradiated with microwave irradiation for 10 to 15 minutes to produce a stable dispersion of cerium oxide in the amine and acid. The stabilized dispersion was washed 2-3 times with ethanol to remove any free amine or acid remaining in the dispersion. Finally, the stabilized cerium oxide product was dried overnight under a vacuum to provide the particles have a size of less than 5 nanometers. X-ray diffraction confirmed that nanoparticles of crystalline cerium oxide were produced. UV absorption of the product showed a peak at 300 nanometers which from extrapolation of the absorption edge indicated a band gap of 3.6 eV confirming that the nanoparticles have a diameter of less than 5 nanometers.

### Example 2 - Production of Mg_{0.3}Mn_{0.7}O Nanoalloy particles (Cubes + Spheres)

The following procedure was used to produce an alloy of magnesium and manganese oxide nanoparticles. Oleylamine (4.25 mL, 0.129 mols) and 1.36 mL of oleic acid (0.04 mols) was mixed in a suitable vessel that was stirred and heated in a hot oil bath to 120° C. and held at that temperature for 10 minutes. A mixture of magnesium acetate (0.14 grams) and manganese acetyl acetonate (0.34 grams) powder was added under vigorous stirring to the amine and acid to provide a clear solution. The solution was then microwaved for 15 minutes. After microwaving the solution, synthesized nanoparticles of magnesium/manganese oxide were flocculated with ethanol, centrifuged, and redispersed in toluene.

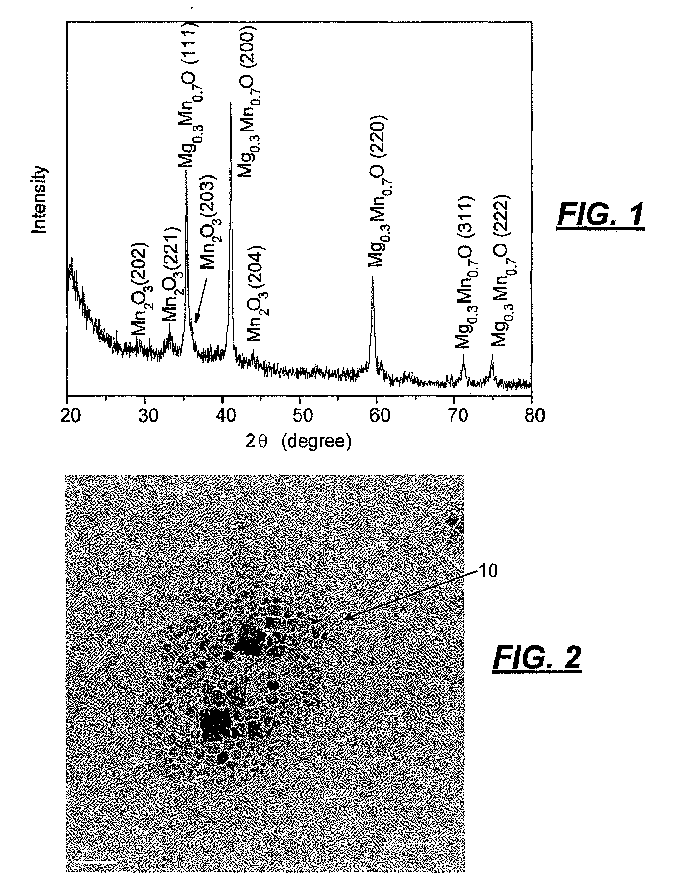

The Mg_{0.3}Mn_{0.7}O nanoparticles made by the foregoing process had an x-ray diffraction pattern as shown in FIG. 1 that indicated that traces of manganese oxide were included in the Mg_{0.3}Mn_{0.7}O alloy. The photomicrograph of the nanoparticles 10 (FIG. 2) showed that the nanoparticles had cube-like structures similar to manganese oxide particles.

### Example 3 - Production of CoFe₂O₄ Nanoalloy particles (Spheres)

The following procedure was used to produce an alloy of cobalt and iron oxide nanoparticles having a particle size of less than 5 nanometers. Oleylamine (3.75 mL, 0.1 114 mols) and 3.6 mL of oleic acid (0.11 mols) was mixed in a suitable vessel that was stirred and heated in a hot oil bath to 120° C. and held at that temperature for 15 minutes. A mixture of iron acetyl acetonate (0.45 grams) and cobalt acetyl acetonate (0.16 grams) powder was added under vigorous stirring to the amine and acid to provide a clear solution. The solution was then microwaved for 10 minutes. After the solution was cooled, 300 µL hydrogen tetrachloroaurate (30 wt.% solution in hydrochloric acid) were injected into the alloyed particle solution under vigorous stirring for 10 minutes. The synthesized nanoparticles of cobalt/iron oxide were flocculated with ethanol, centrifuged, and redispersed in toluene.

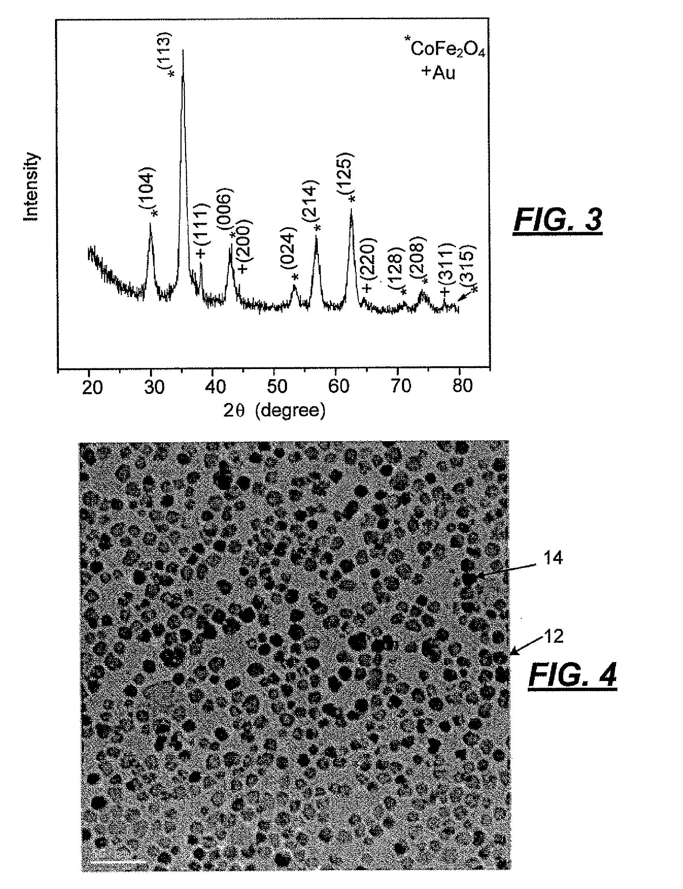

The CoFe₂O₄ nanoparticles made by the foregoing process had an x-ray diffraction pattern as shown in FIG 3 that included metallic gold particles with no evidence of mixed oxides. The photomicrograph of the nanoparticles 12 (FIG. 4) showed monodispersed spherical particles of CoFe₂O₄ doped with gold particles 14.

### Example 4 - Production of CuZnS Nanoalloy particles (Rods+ Spheres)

The following procedure was used to produce an alloy of copper and zinc sulfide nanoparticles having a particle size of less than 5 nanometers. A mixture of copper xanthate (0.17 grams) and zinc xanthate (0.17 grams) was added to 3 grams of hexadecylamine (0.012 mols) that was preheated in a hot oil bath to 80-110° C. and held at that temperature for 15 minutes to form a clear solution. The solution was then microwaved for 2 minutes with 30 second cycles (10 seconds off and 20 seconds on). After microwaving the solution, synthesized nanoparticles of copper/zinc sulfide were flocculated with methanol, centrifuged, and redispersed in toluene or dichloromethane.

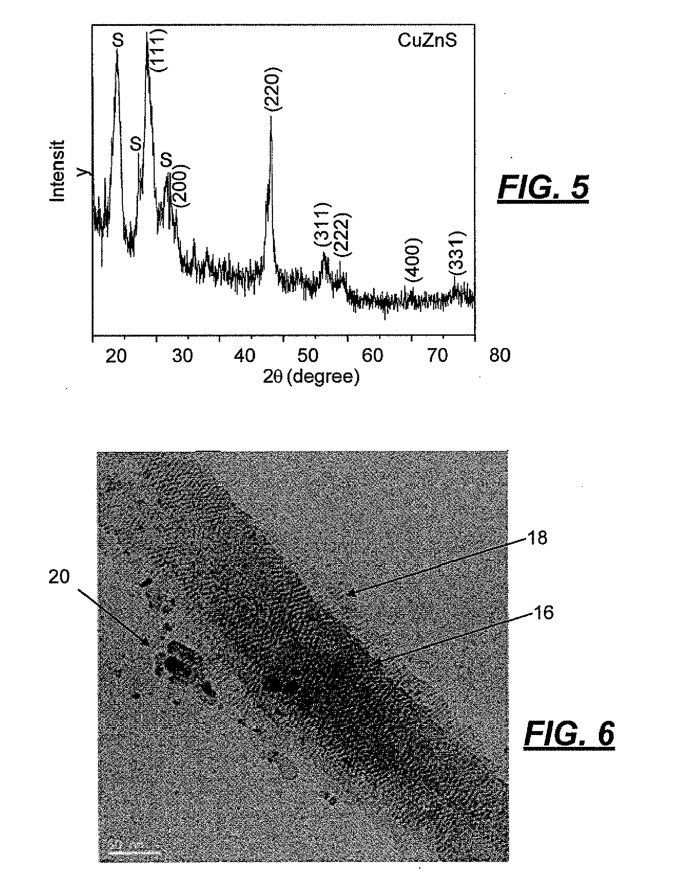

The CuS and ZnS nanoparticles made by the foregoing process had an x-ray diffraction pattern as shown in FIG. 5 that included sulfur atoms. The photomicrograph of the nanoparticles 16 (FIG. 6) showed the formation of ordered aligned rod-like structures arranged in long belts 18. There were also randomly orders small spherical particles 20 next to the belts.

At numerous places throughout this specification has been made to one or more U.S. Patents. All such cited documents are expressly incorporated in full into this disclosure as if fully set forth herein.

The foregoing embodiments are susceptible to considerable variation in its practice. Accordingly, the embodiments are not intended to be limited to the specific exemplifications set forth hereinabove. Rather, the foregoing embodiments are within the spirit and scope of the appended claims, including the equivalents thereof available as a matter of law.

The patentees do not intend to dedicate any disclosed embodiments to the public, and to the extent any disclosed modifications or alterations may not literally fall within the scope of the claims, they are considered to be part hereof under the doctrine of equivalents.

The invention also relates to the following numbered embodiments:
1. A method for producing metal-containing nanoparticles comprising:
   combining a metal organic compound selected from the group consisting of metal acetates, metal acetyl acetonates, and metal xanthates with an amine to provide a solution of metal organic compound in the amine; and
   irradiating the solution with a high frequency radiation source to provide metal nanoparticles having the formula (Aₐ)ₘ(B_{b})ₙXₓ, wherein each of A and B is selected from a metal, X is selected from the group consisting of oxygen, sulfur, selenium, phosphorus, halogen, and hydroxide, subscripts a, b, and x represent compositional stoichiometry, and each of m and n is greater than or equal to zero, with the proviso that at least one of m and n is greater than zero.
2. The method of embodiment 1, wherein the solution is heated prior to the irradiating step.
3. The method of embodiment 2, wherein the solution is heated for a period of time ranging from about 1 minute to about 50 minutes.
4. The method of embodiment 2, wherein the solution is heated to a temperature ranging from about 50° to about 150° C.
5. The method of embodiment 1, wherein the high frequency radiation source comprises a microwave radiation source having a frequency in the range of from about 0.4 to about 40 GHz.
6. The method of embodiment 1, wherein the high frequency radiation source comprises a microwave radiation source having a frequency in the range of from about 0.7 to about 24 GHz.
7. The method of embodiment 6, wherein the solution is irradiated for a period of time ranging from about 10 seconds to about 50 minutes to provide the substantially stabilized dispersion of metal nanoparticles.
8. The method of embodiment I, further comprising, washing the substantially stabilized dispersion of metal nanoparticles with an alcohol subsequent the irradiation step.
9. The method of embodiment 8, wherein the alcohol comprises a C₁ to C₄ alcohol.
10. The method of embodiment 1, further comprising drying the metal nanoparticles.
11. The method of embodiment 1, wherein the solution of metal organic compound and amine further comprises an unsaturated fatty acid containing from about 10 to about 26 carbon atoms.
12. The method of embodiment 10, wherein the organic acid comprises oleic acid.
13. The method of embodiment 1, wherein the amine comprises a hydrocarbyl amine containing from about 3 to about 24 carbon atoms.
14. The method of embodiment 13, wherein the amine comprises oleylamine.
15. The method of embodiment 11, wherein a mole ratio of amine to organic acid in the solution ranges from about 1:1 to about 3:1.
16. The method of embodiment 15, wherein a male ratio of amine to metal organic compound in the solution ranges from about 5:1 to about 10:1.
17. The method of embodiment 1, wherein the organic metal compound further comprises a first metal organic compound and a second metal organic compound, wherein the first and second metal organic compounds are selected from the group consisting of metal acetates, metal acetyl acetonates, and metal xanthates.
18. The method of embodiment 17, wherein each metal of the first and second metal organic compounds is selected from the group consisting of metals from Groups 1A, 2A, 3A, 4A, 5A, and 6A of the Periodic Table, transition metals, lanthanides, actinides, and mixtures thereof.
19. The method of embodiment 1, wherein the metal of the metal organic compound is selected from the group consisting of metals from Groups 1A, 2A, 3A, 4A, 5A, and 6A of the Periodic Table, transition metals, lanthanides, actinides, and mixtures thereof.
20. A method for producing oil dispersible nanoparticles comprising:
   combining cerium acetate with a hydrocarbyl component to provide a cerium acetate solution; and
   irradiating the solution with a high frequency radiation source to provide substantially stabilized dispersion of cerium oxide nanoparticles.
21. The method of embodiment 20, wherein the solution is heated prior to the irradiating step to remove any crystalline water from the cerium acetate.
22. The method of embodiment 21, wherein the solution is heated for a period of time ranging from about 1 minute to about 50 minutes.
23. The method of embodiment 21, wherein the solution is heated to a temperature ranging from about 100° to about 120° C.
24. The method of embodiment 20, wherein the high frequency radiation source comprises a microwave radiation source having a frequency in the range of from about 0.4 to about 40 GHz.
25. The method of embodiment 20, wherein the high frequency radiation source comprises a microwave radiation source having a frequency in the range of from about 0.7 to about 24 GHz.
26. The method of embodiment 25, wherein the solution is irradiated for a period of time ranging from about 10 seconds to about 50 minutes to provide the substantially stabilized dispersion of cerium oxide nanoparticles.
27. The method of embodiment 20, further comprising, washing the substantially stabilized dispersion of cerium oxide nanoparticles with an alcohol subsequent the irradiation step.
28. The method of embodiment 27, wherein the alcohol comprises a C₁ to C₄ alcohol.
29. The method of embodiment 20, further comprising drying the cerium oxide nanoparticles.
30. The method of embodiment 20, wherein the hydrocarbyl component contains from about 10 to about 26 carbon atoms.

## Claims

1. A method for producing metal-containing nanoparticles comprising:
combining a metal organic compound selected from the group consisting of metal acetates, metal acetyl acetonates, and metal xanthates with an amine to provide a solution of metal organic compound in the amine; and
irradiating the solution with a high frequency radiation source to provide metal nanoparticles having the formula (Aa)ₘ(B_{b})ₙXₓ, wherein each of A and B is selected from a metal, X is selected from the group consisting of oxygen, sulfur, selenium, phosphorus, halogen, and hydroxide, subscripts a, b, and x represent compositional stoichiometry, and each of m and n is greater than or equal to zero, with the proviso that at least one of m and n is greater than zero.

2. The method of claim 1, wherein the solution is heated prior to the irradiating step, in particular wherein the solution is heated for a period of time ranging from about 1 minute to about 50 minutes.

3. The method of claim 2, wherein the solution is heated to a temperature ranging from about 50° to about 150° C, preferably from about 100°C to about 120°C.

4. The method of any one of claims 1 to 3, wherein the high frequency radiation source comprises a microwave radiation source having a frequency in the range of from about 0.4 to about 40 GHz, in particular in the range of from about 0.7 to about 24 GHz.

5. The method of claim 4, wherein the solution is irradiated for a period of time ranging from about 10 seconds to about 50 minutes to provide the substantially stabilized dispersion of metal nanoparticles.

6. The method of any one of claims 1 to 5, further comprising, washing the substantially stabilized dispersion of metal nanoparticles with an alcohol subsequent the irradiation step, wherein the alcohol preferably comprises a C₁ to C₄ alcohol.

7. The method of any one of claims 1 to 6, further comprising drying the metal nanoparticles.

8. The method of any one of claims 1 to 7, wherein the solution of metal organic compound and amine further comprises an unsaturated fatty acid containing from about 10 to about 26 carbon atoms, in particular oleic acid.

9. The method of any one of claims 1 to 8, wherein the amine comprises a hydrocarbyl amine containing from about 3 to about 24 carbon atoms, in particular oleylamine.

10. The method of claim 8 or 9, wherein a mole ratio of amine to organic acid in the solution ranges from about 1:1 to about 3:1.

11. The method of claim 10, wherein a mole ratio of amine to metal organic compound in the solution ranges from about 5:1 to about 10:1.

12. The method of any one of claims 1 to 11, wherein the organic metal compound further comprises a first metal organic compound and a second metal organic compound, wherein the first and second metal organic compounds are selected from the group consisting of metal acetates, metal acetyl acetonates, and metal xanthates and/or wherein each metal of the first and second metal organic compounds is selected from the group consisting of metals from Groups 1A, 2A, 3A, 4A, 5A, and 6A of the Periodic Table, transition metals, lanthanides, actinides, and mixtures thereof.

13. A method according to any one of claims 1 to 12 for producing oil dispersible nanoparticles comprising:
combining cerium acetate with a hydrocarbyl component to provide a cerium acetate solution; and
irradiating the solution with a high frequency radiation source to provide substantially stabilized dispersion of cerium oxide nanoparticles as metal nanoparticles.

14. The method of claim 13, wherein the solution is heated prior to the irradiating step to remove any crystalline water from the cerium acetate.
